# EUROPÄISCHE PATENTSCHRIFT

(11) **EP 3 551 475 B1**
(45) Veröffentlichungstag und Bekanntmachung des Hinweises auf die Patenterteilung: **16.09.2020**
(21) Anmeldenummer: 17783494.2
(22) Anmeldetag: 12.10.2017
(51) Int. Cl.: B60C 11/12, B60C 11/03

(54) **FAHRZEUGLUFTREIFEN**
PNEUMATIC VEHICLE TIRE
PNEUMATIQUE DE VÉHICULE

(30) Priorität: 07.12.2016 DE 102016224365
(43) Veröffentlichungstag der Anmeldung: 16.10.2019
(73) Patentinhaber: Continental Reifen Deutschland GmbH, 30165 Hannover (DE)
(72) Erfinder: BRANDAU, Christian, 31542 Bad Nenndorf (DE); SENG, Matthias, 30453 Hannover (DE); KRINGS, Stefan, 31547 Rehburg-Loccum (DE)
(74) Vertreter: Finger, Karsten
(86) Internationale Anmeldenummer: PCT/EP2017/076024
(87) Internationale Veröffentlichungsnummer: WO 2018/103920

(56) Entgegenhaltungen:
- EP-A1- 3 034 331
- EP-A1- 3 034 332
- EP-A1- 3 045 326
- EP-A2- 1 170 152
- WO-A1-2016/155855
- US-A- 4 934 424
- US-A1- 2006 151 078

## Beschreibung

Die Erfindung betrifft einen Fahrzeugluftreifen in Radialbauart mit einem Laufstreifen, welcher zwei Schulterblockreihen und einen mittleren Laufstreifenbereich mit zumindest einer Profilblockreihe aufweist, welche beidseitig durch Umfangsrillen begrenzt ist, wobei die Profilblockreihe zu einem Umfangsbereich gehört, welcher nach einem Verfahren der Pitchlängenvariation geräuschoptimiert ist, wobei die Profilblöcke dieser Profilblockreihe in Umfangsrichtung und an der Laufstreifenperipherie jeweils durch zwei sich im Wesentlichen parallel zueinander und in Draufsicht zur axialen Richtung unter einem Winkel von 5° bis 30° erstreckende Blockkanten begrenzt sind und jeweils mit Einschnitten versehen sind, welche eine Breite von 0,3 mm bis 0,8 mm aufweisen und die Profilblöcke durchqueren.

Ein derartiger Fahrzeugluftreifen ist aus der EP 3 045 326 A1 bekannt. Dieser Fahrzeugluftreifen weist einen Laufstreifen mit zumindest einer im mittleren Laufstreifenbereich verlaufenden Profilblockreihe auf, deren Profilblöcke an der Laufstreifenperipherie durch Blockkanten begrenzt sind, welche zur axialen Richtung unter einem Winkel von 30° bis 45° verlaufen. Jeder Profilblock ist mit zumindest zwei parallel zueinander verlaufenden Einschnitten versehen, wobei in Umfangsrichtung jeweils ein Profilblock, in welchem die Einschnitte parallel zu den Blockkanten orientiert sind, mit einem Profilblock, in welchem die Einschnitte unter einem Winkel von 50° bis 70° zu den Blockkanten orientiert sind, abwechselt. Dadurch sollen die Handlingeigenschaften des Reifens bei in unterschiedlichen Richtungen wirkenden Belastungen sowie insbesondere bei Kurvenfahrt verbessert sein.

Fahrzeugluftreifen eingangs genannter Art sind insbesondere für einen Einsatz unter winterlichen Fahrbedingungen vorgesehen und in unterschiedlichen Ausgestaltungen bekannt. Die in den Profilblöcken verlaufenden Einschnitte sorgen für einen guten Schneegriff, da sie ein "Öffnen" der Profilblöcke bewirken, wodurch Griffkanten für die Kraftübertragung auf Schnee zur Verfügung stehen. Üblicherweise weisen ferner sämtliche Einschnitte seitliche seichte Abschnitte auf, die in Folge irrer die Profilblöcke versteifenden Wirkung für gute Handlingeigenschaften vorteilhaft sind.

Block- und Einschnittkanten von Profilblöcken im mittleren Laufstreifenbereich mit der oben erwähnten Orientierung zur axialen Richtung schlagen beim Abrollen des Fahrzeugluftreifens oft im Wesentlichen parallel zur Ein-oder Auslaufkante des Footprints auf. Dadurch entstehen Schwingungen, die in den Fahrgastraum des Fahrzeuges geleitet werden und hier Luftschwingungen anregen, die als Innenraumgeräusch wahrnehmbar sind. Bei der Schwingungsübertragung werden bestimmte Frequenzbereiche verstärkt oder abgeschwächt. Über die Fahrzeugstruktur werden vor allem Schwingungen im Bereich bis zu 800 Hz übertragen. Somit ist es vorteilhaft, wenn Frequenzen höher als 800 Hz erzeugt werden, da diese nicht strukturell in das Fahrzeug übertragen werden. Die Frequenzen, die beim Abrollen des Reifens entstehen, sind von der Fahrgeschwindigkeit, dem Reifenumfang und der Pitchanzahl abhängig, wobei bei Profilblockreihen im Laufstreifen die Pitchanzahl der Anzahl der Profilblöcke über den Reifenumfang entspricht. Ein Laufstreifenprofil mit einer hohen Pitchanzahl ist daher für ein geringes Innenraumgeräusch besser, aber viele Pitches bedingen auch eine relativ kurze Umfangslänge der Profilblöcke, ein Umstand, der ein geringere Steifigkeit der Profilblöcke und dadurch eine verminderte Kraftübertragung, insbesondere auf trockener Straße, bewirkt.

Der Erfindung liegt daher die Aufgabe zugrunde, bei einem Fahrzeugluftreifen der eingangs genannten Art die beim Fahren im Fahrzeuginneren wahrnehmbaren Geräusche merklich zu reduzieren.

Die gestellte Aufgabe wird erfindungsgemäß dadurch gelöst,
dass der Umfangsbereich, zu welchem die Profilblockreihe gehört, in 55 bis 65 Pitches gegliedert ist, wobei jeder Profilblock der Profilblockreihe mit zumindest drei Einschnitten versehen ist, welche sich in Draufsicht parallel zu den Blockkanten erstrecken,
wobei im mittleren Bereich der Profilblöcke jeweils ein Einschnitt verläuft, welcher über seine gesamte Erstreckung eine insbesondere konstante Tiefe von 70% bis 100% der Profiltiefe aufweist und wobei die weiteren Einschnitte jeweils einen mittleren Abschnitt, dessen Tiefe 70% bis 100% der Profiltiefe beträgt, und zwei seitliche in die Umfangsrillen einmündende Abschnitte aufweisen, deren Tiefe höchstens 60% der Profiltiefe beträgt.

Die gemäß der Erfindung in den Profilblöcken vorgesehenen mittleren Einschnitte, welche über ihrer gesamte Erstreckung eine relativ große Tiefe aufweisen, öffnen sich beim Einlaufen des Reifens in die Bodenaufstandsfläche oder beim Auslaufen aus der Bodenaufstandsfläche und bewirken derart ein "Aufklappen" der Profilblöcke, sodass die Profilblockteile voneinander "entkoppelt" werden und sich in der Profilblockmitte kurzzeitig ein etwas breiterer Spalt bildet. Dies bewirkt für das entstehende Abrollgeräusch eine Verdopplung der Geräusch verursachenden "Profilstrukturen", so dass die entstehenden Schwingungen in einen doppelt so hohen Frequenzbereich verlagert sind. Bei üblichen Geschwindigkeiten von 80km/h bis 100 km/h sind die Frequenzen der entstehenden Schwingungen deutlich größer als 800 Hz. Schwingungen mit derart hohen Frequenzen werden über die Fahrzeugstrukturen nicht mehr in den Fahrzeuginnenraum übertragen, wodurch die dort wahrnehmbaren Geräusche merklich reduziert sind. Ein etwaiger Nachteil - geringere Steifigkeit der Profilblöcke durch den Wegfall der seichteren seitlichen Abschnitte im mittleren Einschnitt - ergibt sich dadurch nicht, das die weiteren Einschnitte in den Profilblöcken für eine gute Versteifung durch Abstützeffekte sorgen und die Profilblöcke von vornhinein schon eine für ihre Steifheit günstige große Umfangslänge aufweisen.

Bei einer bevorzugten Ausführungsform der Erfindung wird die Position des im mittleren Bereich der Profilblöcke vorgesehenen tiefen Einschnittes in Abhängigkeit von der Anzahl der im Profilblock vorgesehenen Einschnitte gewählt. In einem Profilblock, welcher eine gerade Anzahl von Einschnitten mit seichteren seitlichen Abschnitten aufweist, wird die Anordnung des mittleren Einschnittes derart getroffen, dass beidseits des mittleren Einschnittes jeweils die gleiche Anzahl von Einschnitten mit seichteren seitlichen Abschnitten verläuft. Bei Ausführungen von Profilblöcken, in welchen eine ungerade Anzahl von Einschnitten mit seichteren seitlichen Abschnitten vorgesehen ist, wird die Anordnung des mittleren Einschnittes derart getroffen, dass sich die Anzahl der beidseits des mittleren Einschnittes verlaufenden Einschnitte mit seichteren seitlichen Abschnitten um die Zahl Eins unterscheidet.

Um den Effekt des "Aufklappens" der Profilblöcke zu verstärken, kann gemäß einem weiteren Merkmal der Erfindung vorgesehen sein, die Breite des mittleren Einschnittes in den Profilblöcken um 0,1 mm bis 0,2 mm größer zu wählen als die Breite der weiteren, in den Profilblöcken vorgesehenen Einschnitte.

Bevorzugt ist ferner eine Ausführung der Erfindung, bei der die seichteren seitlichen Abschnitte der weiteren Einschnitte jeweils über 10% bis 25% der Erstreckungslänge dieser Einschnitte verlaufen.

Eine Beeinflussung der Steifigkeit der Profilblöcke durch Abstützeffekte lässt sich dadurch erzielen, wenn gemäß der Erfindung sowohl der tiefere mittlere Einschnitt als auch zumindest einige der weiteren Einschnitte jeweils einen mittleren, in Draufsicht wellenförmig verlaufenden Abschnitt und zwei seitliche, in Draufsicht gerade verlaufende Abschnitte aufweisen.

Erfindungsgemäß ausgeführte Profilblöcke können ferner jeweils mit bis zu sieben Einschnitten versehen sein.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt eines Laufstreifens eines Fahrzeugluftreifens und
Fig. 2 eine schematische Seitenansicht eines Umfangsabschnittes einer Profilblockreihe des Laufstreifens während eines Abrollvorganges.

Erfindungsgemäß ausgeführte Fahrzeugluftreifen sind Winterreifen oder Ganzjahresreifen in Radialbauart für Personenkraftwagen, Vans oder Light-Trucks.

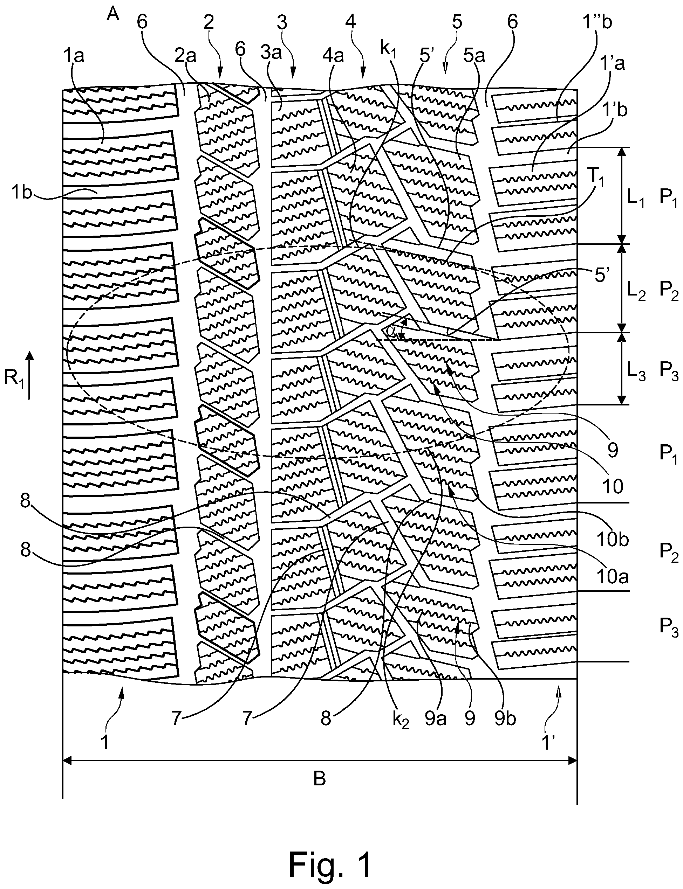

In Fig. 1 ist die Außenkontur der statischen Bodenaufstandsfläche (statischer Footprint) eines Reifens im Laufstreifen gemäß E.T.R.T.O - Standards (Last bei 100 % der Tragfähigkeit bei einem Innendruck von 2,5 bar, Innendruck 85 % von 2,9 bar) als Oval angedeutet. Die Außenkontur der Bodenaufstandsfläche ist in Umfangsrichtung durch konvex gekrümmte Begrenzungslinien k₁, k₂ begrenzt, wobei im gezeigten Beispiel entsprechend der durch den Pfeil R₁ gekennzeichneten möglichen Abrollrichtung des Fahrzeugluftreifens bei Vorwärtsfahrt, der Laufstreifen über die Begrenzungslinie k₁ in die Bodenaufstandsfläche eintritt und diese über die Begrenzungslinie k₂ verlässt. Die größte Breite des Laufstreifens innerhalb der Bodenaufstandsfläche ist mit B bezeichnet.

Der dargestellte Laufstreifen ist ein sogenannter asymmetrisch gestalteter Laufstreifen, demnach ein Laufstreifen für einen Fahrzeugluftreifen, der, bezogen auf das Fahrzeug, derart zu montieren ist, dass sich bei montiertem Reifen ein bestimmter Laufstreifenbereich, die in Fig. 1 mit A bezeichnete Außenschulter, an der Außenseite des Fahrzeuges und ein bestimmter Laufstreifenbereich, die in Fig. 1 mit I bezeichnete Innenschulter, an der Innenseite befindet.

Der Laufstreifen gemäß Fig. 1 weist zwei schulterseitige Blockreihen auf, eine bei der Außenschulter A verlaufende Schulterblockreihe 1 und eine bei der Innenschulter I verlaufende Schulterblockreihe 1'. Im mittleren Laufstreifenbereich zwischen den beiden Schulterblockreihen 1,1' verlaufen in Umfangsrichtung vier Blockreihen 2, 3, 4 und 5 mit Profilblöcken 2a, 3a, 4a und 5a. Die Schulterblockreihen 1,1' setzen sich in Umfangsrichtung aus Profilblöcken 1a, 1'a zusammen, die voneinander durch Querrillen 1b, 1'b getrennt sind. Bei der gezeigten Ausführung sind ferner die Profilblöcke 1'a in der Schulterblockreihe 1' etwa mittig mit je einer zusätzlichen Querrille 1"b versehen, die schmäler ist als die Querrillen 1'b und zu diesen parallel verläuft. Auf diese Weise sind die Profilblöcke 1'a doppelblockartig gestaltet. Die Querrillen 1b, 1'b erstrecken sich bei der gezeigten Ausführung unter einem kleinen spitzen Winkel von bis zu 10° zur exakten Querrichtung.

Die Gliederung des Laufstreifens im mittleren Bereich in vier Blockreihen 2, 3, 4 und 5 erfolgt durch Umfangsrillen 6, die an die Schulterblockreihen 1,1' anschließen, und weitere in Umfangsrichtung bzw. unter einem spitzen Winkel kleiner 45° zur Umfangsrichtung verlaufende Umfangsrillen 7 und durch Querrillen 8, die unter einem Winkel ≤ 45° zur exakten Querrichtung verlaufen. Nachdem die Ausgestaltung und der Verlauf der Rillen 7 sowie der Querrillen 8 für die gegenständliche Erfindung nicht von Belang sind, wird auf diese nicht näher eingegangen.

Die Profilstrukturen des Laufstreifens sind, wie es üblich ist, nach dem bekannten Verfahren der Pitchlängenvariation geräuschoptimiert ausgelegt. Dabei kann eine bestimmte Pitchfolge die gesamte Ausgestaltung oder lediglich die Ausgestaltung eines Umfangsbereiches betreffen, sodass ein Laufstreifen beispielsweise zwei Umfangsbereiche mit unterschiedlichen Pitchfolgen umfasst. Bei der gezeigten Ausführung gehören die Profilblockreihen 1 und 2 zu einem solchen Umfangbereich, welcher für die Erfindung nicht von Belang ist, die Profilblockreihen 3, 4, 5 und 1' zu einem weiteren, Umfangsbereich des Laufstreifens, welcher mit zumindest einer erfindungsgemäß gestalteten Profilblockreihe, der Profilblockreihe 5, versehen ist. Der Umfangsbereich, zu welchem die Profilblockreihen 3, 4, 5 und 1' gehören, weist 50 bis 65 Pitches - in Umfangsrichtung aufeinanderfolgende, in jeder Profilblockreihe 3, 4, 5 und 1' gleichartig gestaltete Profilabschnitte - über den Reifenumfang auf. Beim gezeigten Bespiel sind Pitches P₁, P₂, P₃ mit drei unterschiedlichen Umfangslängen L₁, L₂, L₃, die am Laufstreifenrand gekennzeichnet sind, vorgesehen sind. Die Pitches P₁, P₂, P₃ werden über den Umfang der innerhalb einer Pitchfolge, die üblicherweise rechnerisch ermittelt wird, angeordnet.

Die Profilblöcke 5a der Profilblockreihe 5 weisen in Umfangsrichtung an der Laufstreifenperipherie jeweils zwei Blockkanten 5' auf, welche im Wesentlichen parallel zueinander sowie in Draufsicht zur axialen Richtung unter einem Winkel α von 5° bis 30° verlaufen. Der Winkel α ist daher derart gewählt, dass die Blockkanten 5' in einem entlang jeder Blockkante 5' befindlichen Punkt beim Eintreten in die Bodenaufstandsfläche tangential zur konvex gekrümmten Begrenzungslinie k₁ oder k₂ je nach Abrollrichtung bei Vorwärtsfahrt, orientiert sind. Eine in Draufsicht parallel zu den Blockkanten 5' verlaufende und an die Begrenzungslinie k₁ angelegte Tangente T₁ soll dies in Fig. 1 versinnbildlichen.

Jeder Profilblock 5a ist mit Einschnitten 9, 10 versehen, einem einzigen mittleren Einschnitt 9, dessen Tiefenverlauf sich von jenem der weiteren Einschnitte 10 unterscheidet, wie noch beschrieben wird. Die Einschnitte 10 sind beim gezeigten Ausführungsbeispiel und je nach Pitch P₁, P₂, P₃ in einer Anzahl von drei bis fünf vorgesehen. Sämtliche Einschnitte 9, 10 durchqueren die Profilblöcke 5a, sind gleichmäßig über den jeweiligen Profilblock 5a verteilt und erstrecken sich in Draufsicht im Wesentlichen parallel zu den Blockkanten 5'. Die Einschnitte 9, 10 können gleiche Breiten von 0,3 mm bis 0,8 mm aufweisen, wobei die Breite des mittleren Einschnittes 9 um 0,1 mm bis 0,2 mm größer sein kann als die Breite der Einschnitte 10.

Bei einer geraden Anzahl von Einschnitten 10 befindet sich der mittlere Einschnitt 9 bezüglich der Blockkanten 5' zumindest im Wesentlichen in der Mitte des Profilblockes 5a, eine jeweils gleiche Anzahl von Einschnitten 10 verläuft beiderseits des Einschnittes 9. Bei einer ungeraden Anzahl von Einschnitten 10 unterscheidet sich die Anzahl des beiderseits des mittleren Einschnittes 9 verlaufenden Einschnitte 10 um die Zahl Eins.

Die Einschnitte 9, 10 weisen bei der dargestellten Ausführung einen in Draufsicht wellenförmigen mittleren Abschnitt 9a, 10a und beidseitig an diesen anschließende in Draufsicht gerade verlaufende seitliche Abschnitte 9b, 10b auf, welche in die die Profilblockreihe 5 seitlich begrenzenden Rillen 6, 7 einmünden. Die mittleren Abschnitte 9a, 10a erstrecken sich über 50% bis 80% der Erstreckungslänge der Einschnitte 9, 10. Jeder Einschnitt 9 weist in radialer Richtung über seine gesamte Erstreckung eine insbesondere konstante Tiefe auf, welche 70% bis 100% der für den jeweiligen Laufstreifen vorgesehenen Profiltiefe, die 6,5 mm bis 9,0 mm beträgt, entspricht.

Hingegen sind die Einschnitte 10 derart ausgeführt, dass sich ihr wellenförmiger mittlerer Abschnitt 10a in radialer Richtung ebenfalls bis in die bereits erwähnte Tiefe von 70% bis 100% der für den jeweiligen Laufstreifen vorgesehenen Profiltiefe erstreckt, die seitlichen Abschnitte 10b jedoch eine geringere Tiefe von 20 % bis höchstens 60%, insbesondere höchstens 30%, der Profiltiefe aufweisen, wobei sich die Tiefen der beiden seitlichen Abschnitte 10b voneinander unterscheiden können.

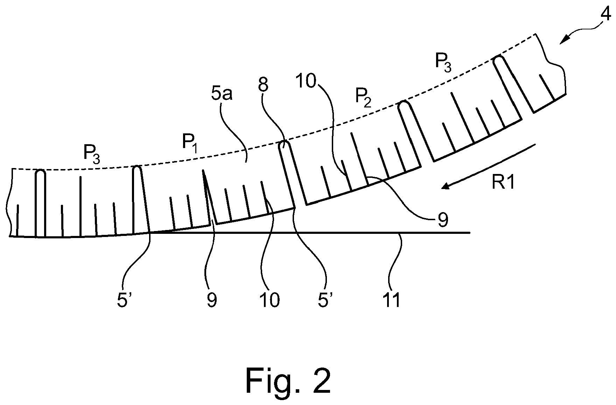

Fig. 2 zeigt eine schematische Seitenansicht eines Umfangsabschnittes der Profilblockreihe 5 beim Abrollen des Reifens auf einer Fahrbahn 11, wobei der Pfeil R₁ die Abrollrichtung bei Vorwärtsfahrt versinnbildlicht. Beim Eintritt eines Profilblockes 5a in die Bodenaufstandsfläche bewirkt der jeweilige mittlere konstant tiefe Einschnitt 9 ein "Aufklappen" des Profilblockes 5a, sodass beim Abrollen des Reifens pro Profilblock 5a vier Kanten - die beiden Blockkanten 5' und die beiden Einschnittkanten der Einschnitte 9 - auf der Fahrbahn 11 aufschlagen. Dies bewirkt für das entstehende Abrollgeräusch eine Verdopplung der das Geräusch verursachenden "Profilstrukturen", so dass die entstehenden Schwingungen in einen höheren Frequenzbereich verlagert werden. Bei üblichen Geschwindigkeiten von 80km/h bis 100 km/h sind die Frequenzen der entstehenden Schwingungen somit deutlich größer als 800 Hz. Schwingungen mit derart hohen Frequenzen werden über die Fahrzeugstrukturen nicht mehr in den Fahrzeuginnenraum übertragen, wodurch die dort wahrnehmbaren Geräusche merklich reduziert sind.

Die Erfindung ist auf das beschriebene Ausführungsbeispiel nicht beschränkt. Insbesondere können gemäß der Erfindung gestaltete Laufstreifen im mittleren Laufstreifenbereich auch zwei oder vier Profilblockreihen aufweisen oder zumindest in einem Umfangsbereich blockartig gestaltet sein. Die Profilblöcke können bis zu sieben Einschnitte aufweisen. Ferner können die Profilblöcke in Draufsicht eine der üblichen Gestaltungen aufweisen, wobei sie in Umfangsrichtung zumindest abschnittweise Blockkanten mit der beschriebenen Orientierung (Winkel a) aufweisen.

### Bezugsziffernliste

- 1, 1' .................: Schulterblockreihe
- 1a, 1'a..............: Profilblock
- 1b, 1'b .............: Querrille
- 2, 3, 4, 5...........: Profilblockreihe
- 2a, 3a,4a, 5a.....: Profilblock
- 5' .....................: Blockkante
- 6, 7 ..................: Umfangsrille
- 8 ......................: Querrille
- 9, 10 ................: Einschnitt
- 9a, 9b, 10a,: 10b Abschnitt
- 11 ....................: Fahrbahn
- k₁, k₂................: Begrenzungslinie
- B .....................: Breite
- L₁, L₂, L₃ .........: Umfangslänge
- P₁, P₂, P₃..........: Pitch
- R₁ ....................: Abrollrichtung
- T₁ ....................: Tangente
- α ......................: Winkel

## Patentansprüche

1. Fahrzeugluftreifen in Radialbauart mit einem Laufstreifen, welcher zwei Schulterblockreihen (1, 1') und einen mittleren Laufstreifenbereich mit zumindest einer Profilblockreihe (5) aufweist, welche beidseitig durch Umfangsrillen (6, 7) begrenzt ist, wobei die Profilblockreihe (5) zu einem Umfangsbereich gehört, welcher nach einem Verfahren der Pitchlängenvariation geräuschoptimiert ist, wobei die Profilblöcke (5a) dieser Profilblockreihe (5) in Umfangsrichtung und an der Laufstreifenperipherie jeweils durch zwei sich im Wesentlichen parallel zueinander und in Draufsicht zur axialen Richtung unter einem Winkel (α) von 5° bis 30° erstreckende Blockkanten (5') begrenzt sind und jeweils mit Einschnitten (9, 10) versehen sind, welche eine Breite von 0,3 mm bis 0,8 mm aufweisen und die Profilblöcke (5a) durchqueren,
**dadurch gekennzeichnet,**
**dass** der Umfangsbereich, zu welchem die Profilblockreihe (5) gehört, in 55 bis 65 Pitches gegliedert ist, wobei jeder Profilblock (5a) der Profilblockreihe (5) mit zumindest drei Einschnitten (9, 10) versehen ist, welche sich in Draufsicht parallel zu den Blockkanten (5') erstrecken, wobei im mittleren Bereich der Profilblöcke (5a) jeweils ein Einschnitt (9) verläuft, welcher über seine gesamte Erstreckung eine insbesondere konstante Tiefe von 70% bis 100% der Profiltiefe aufweist und wobei die weiteren Einschnitte (10) jeweils einen mittleren Abschnitt, dessen Tiefe 70% bis 100% der Profiltiefe beträgt, und zwei seitliche in die Umfangsrillen (6) einmündende Abschnitte (10b) aufweisen, deren Tiefe höchstens 60% der Profiltiefe beträgt.

2. Fahrzeugluftreifen nach Anspruch 1, **dadurch gekennzeichnet, dass** in einem Profilblock (5a), welcher eine gerade Anzahl von Einschnitten (10) mit seichteren seitlichen Abschnitten (10b) aufweist, beiderseits des mittleren Einschnittes (9) jeweils die gleiche Anzahl von Einschnitten (10) mit seichteren seitlichen Abschnitten (10b) verläuft.

3. Fahrzeugluftreifen nach Anspruch 1, **dadurch gekennzeichnet, dass** in einem Profilblock (5a), welcher eine ungerade Anzahl von Einschnitten (10) mit seichteren seitlichen Abschnitten (10b) aufweist, sich die Anzahl der beiderseits des mittleren Einschnittes (9) verlaufenden Einschnitte (10) mit seichteren seitlichen Abschnitten (10b) um die Zahl Eins unterscheidet.

4. Fahrzeugluftreifen nach einem der Ansprüche 1 bis 3, **dadurch gekennzeichnet, dass** die Breite des mittleren Einschnittes (9) um 0,1 mm bis 0,2 mm größer ist als die Breite der weiteren Einschnitte (10).

5. Fahrzeugluftreifen nach einem der Ansprüche 1 bis 4, **dadurch gekennzeichnet, dass** sich die seichteren seitlichen Abschnitte (10b) der weiteren Einschnitte (10) jeweils über 10% bis 25% der Erstreckungslänge dieser Einschnitte (10) erstrecken.

6. Fahrzeugluftreifen nach einem der Ansprüche 1 bis 5, **dadurch gekennzeichnet, dass** die Tiefe der seichteren seitlichen Abschnitte (10b) der weiteren Einschnitte (10) höchstens 30% der Profiltiefe beträgt.

7. Fahrzeugluftreifen nach einem der Ansprüche 1 bis 6, **dadurch gekennzeichnet, dass** der mittlere Einschnitt (9) und zumindest einige der weiteren Einschnitte (9, 10) jeweils einen mittleren, in Draufsicht wellenförmig verlaufenden Abschnitt (9a, 10a) und zwei seitliche in Draufsicht gerade verlaufende Abschnitte (9b, 10b) aufweisen.

8. Fahrzeugluftreifen nach einem der Ansprüche 1 bis 7, **dadurch gekennzeichnet, dass** die Profilblöcke (5a) der im mittleren Laufstreifenbereich verlaufenden Profilblockreihe (5) jeweils mit bis zu sieben Einschnitten (9, 10) versehen sind.

## Claims

1. Pneumatic vehicle tyre of a radial type of construction, comprising a tread, which has two rows of shoulder bars (1, 1') and a central tread region with at least one row of tread bars (5), which is delimited on both sides by circumferential grooves (6, 7), wherein the row of tread bars (5) belongs to a circumferential region that is noise-optimized in accordance with a method of pitch length variation, wherein the tread bars (5a) of this row of tread bars (5) are in each case delimited in the circumferential direction and at the tread periphery by two bar edges (5'), which extend substantially parallel to one another and in plan view at an angle (α) to the axial direction of 5° to 30°, and are in each case provided with sipes (9, 10), which have a width of 0.3 mm to 0.8 mm and cross the tread bars (5a),
**characterized**
**in that** the circumferential region to which the row of tread bars (5) belongs is divided into 55 to 65 pitches, wherein each tread bar (5a) of the row of tread bars (5) is provided with at least three sipes (9, 10), which in plan view extend parallel to the bar edges (5'), wherein in the central region of the tread bars (5a) there runs in each case a sipe (9) that has over its entire extent a depth, in particular a constant depth, of 70% to 100% of the tread-pattern depth and wherein the further sipes (10) have in each case a central portion, the depth of which is 70% to 100% of the tread-pattern depth, and two lateral portions (10b), which enter the circumferential grooves (6) and the depth of which is at most 60% of the tread-pattern depth.

2. Pneumatic vehicle tyre according to Claim 1, **characterized in that**, in a tread bar (5a) that has an even number of sipes (10) with shallower lateral portions (10b), the same number of sipes (10) with shallower lateral portions (10b) run on each of both sides of the central sipe (9).

3. Pneumatic vehicle tyre according to Claim 1, **characterized in that**, in a tread bar (5a) that has an uneven number of sipes (10) with shallower lateral portions (10b), the number of sipes (10) with shallower lateral portions (10b) running on each of both sides of the central sipe (9) differs by the number one.

4. Pneumatic vehicle tyre according to one of Claims 1 to 3, **characterized in that** the width of the central sipe (9) is greater than the width of the further sipes (10) by 0.1 mm to 0.2 mm.

5. Pneumatic vehicle tyre according to one of Claims 1 to 4, **characterized in that** the shallower lateral portions (10b) of the further sipes (10) extend in each case over 10% to 25% of the length of extent of these sipes (10).

6. Pneumatic vehicle tyre according to one of Claims 1 to 5, **characterized in that** the depth of the shallower lateral portions (10b) of the further sipes (10) is at most 30% of the tread-pattern depth.

7. Pneumatic vehicle tyre according to one of Claims 1 to 6, **characterized in that** the central sipe (9) and at least some of the further sipes (9, 10) have in each case a central portion (9a, 10a), running in a wave-shaped manner in plan view, and two lateral portions (9b, 10b), running straight in plan view.

8. Pneumatic vehicle tyre according to one of Claims 1 to 7, **characterized in that** the tread bars (5a) of the row of tread bars (5) running in the central tread region are in each case provided with up to seven sipes (9, 10).

## Revendications

1. Pneu de véhicule de type radial muni d'une bande de roulement, qui comprend deux séries de blocs d'épaulement (1, 1') et une zone centrale de bande de roulement munie d'au moins une série de blocs de profilé (5), qui est délimitée des deux côtés par des rainures circonférentielles (6, 7), la série de blocs de profilé (5) appartenant à une zone circonférentielle, qui est optimisée en termes de bruit par un procédé de variation de longueur de segment, les blocs de profilé (5a) de cette série de blocs de profilé (5) étant délimités dans la direction circonférentielle et au niveau de la périphérie de bande de roulement respectivement par deux bords de blocs (5') s'étendant essentiellement en parallèle l'un à l'autre et formant un angle (α) de 5° à 30° en vue de dessus par rapport à la direction axiale et étant respectivement munis d'entailles (9, 10), qui présentent une largeur de 0,3 mm à 0,8 mm et traversent les blocs de profilé (5a),
**caractérisé en ce que**
la zone circonférentielle, à laquelle la série de blocs de profilé (5) appartient, est divisée en 55 à 65 segments, chaque bloc de profilé (5a) de la série de blocs de profilé (5) étant muni d'au moins trois entailles (9, 10), qui s'étendent parallèlement aux bords de blocs (5') en vue de dessus, une entaille (9) passant respectivement dans la zone centrale des blocs de profilé (5a), qui présente sur toute son extension une profondeur notamment constante de 70 % à 100 % de la profondeur de profilé et les autres entailles (10) comprenant respectivement une section centrale, dont la profondeur est de 70 % à 100 % de la profondeur de profilé, et deux sections latérales (10b) débouchant dans les rainures circonférentielles (6), dont la profondeur est d'au plus 60 % de la profondeur de profilé.

2. Pneu de véhicule selon la revendication 1, **caractérisé en ce que**, dans un bloc de profilé (5a), qui comprend un nombre pair d'entailles (10) munies de sections latérales peu profondes (10b), respectivement le même nombre d'entailles (10) munies de sections latérales peu profondes (10b) passent des deux côtés de l'entaille centrale (9).

3. Pneu de véhicule selon la revendication 1, **caractérisé en ce que**, dans un bloc de profilé (5a), qui comprend un nombre impair d'entailles (10) munies de sections latérales peu profondes (10b), le nombre des entailles (10) munies de sections latérales peu profondes (10b) passant des deux côtés de l'entaille centrale (9) diffère du nombre un.

4. Pneu de véhicule selon l'une quelconque des revendications 1 à 3, **caractérisé en ce que** la largeur de l'entaille centrale (9) est 0,1 mm à 0,2 mm plus grande que la largeur des autres entailles (10).

5. Pneu de véhicule selon l'une quelconque des revendications 1 à 4, **caractérisé en ce que** les sections latérales peu profondes (10b) des autres entailles (10) s'étendent respectivement sur 10 % à 25 % de la longueur d'extension de ces entailles (10).

6. Pneu de véhicule selon l'une quelconque des revendications 1 à 5, **caractérisé en ce que** la profondeur des sections latérales peu profondes (10b) des autres entailles (10) est d'au plus 30 % de la profondeur de profilé.

7. Pneu de véhicule selon l'une quelconque des revendications 1 à 6, **caractérisé en ce que** l'entaille centrale (9) et au moins certaines des autres entailles (9, 10) comprennent respectivement une section centrale de forme ondulée en vue de dessus (9a, 10a) et deux sections latérales droites en vue de dessus (9b, 10b).

8. Pneu de véhicule selon l'une quelconque des revendications 1 à 7, **caractérisé en ce que** les blocs de profilé (5a) de la série de blocs de profilé (5) passant dans la zone centrale de bande de roulement sont respectivement munis de jusqu'à sept entailles (9, 10) .
